Europäisches Patentamt

European Patent Office

Office européen des brevets

(19)

(11) Veröffentlichungsnummer : **0 173 801**
**B1**

## (12) EUROPÄISCHE PATENTSCHRIFT

(45) Veröffentlichungstag der Patentschrift :
05.04.89

(21) Anmeldenummer : 85106718.1

(22) Anmeldetag : 31.05.85

(51) Int. Cl.⁴ : **G 01 N 27/46**

---

(54) **Elektrochemische Messzelle.**

---

(30) Priorität : 07.09.84 DE 3432949

(43) Veröffentlichungstag der Anmeldung :
12.03.86 Patentblatt 86/11

(45) Bekanntmachung des Hinweises auf die Patenterteilung : 05.04.89 Patentblatt 89/14

(84) Benannte Vertragsstaaten :
BE DE FR GB NL SE

(56) Entgegenhaltungen :
EP--A-- 0 173 800
DE--A-- 2 539 771
GB--A-- 1 200 595
US--A-- 3 689 394
US--A-- 4 100 048
US--A-- 4 526 674

(73) Patentinhaber : **Drägerwerk Aktiengesellschaft**
**Moislinger Allee 53-55**
**D-2400 Lübeck 1 (DE)**

(72) Erfinder : **Hölscher, Uvo, Dr.**
**Stettiner Strasse 6a**
**D-2406 Stockelsdorf (DE)**

EP 0 173 801 B1

Jouve, 18, rue St-Denis, 75001 Paris, France

## Beschreibung

Die Erfindung betrifft eine elektrochemische Meßzelle, bestehend aus einer Meßelektrode und einer Gegenelektrode in einem Elektrolyten, welcher durch eine Diffusionsmembran von dem Außenraum getrennt ist.

Derartige Meßzellen sind unter Benutzung der sogenannten Clark-Elektroden zur Messung der Konzentration bzw. des Partialdruckes von Gasen bekannt.

Bei den bekannten Clark-Elektroden-Anordnungen besteht die Meßelektrode aus einem dünnen Platindraht, welcher in dem Elektrolyten bis zu einem bestimmten Abstand zur Innenfläche der Diffusionsmembran herangebracht wird, wobei die Einhaltung des für die Messung maßgeblichen Abstandes zwischen Platindrahtspitze und Membranfläche wichtig ist. Jede Veränderung dieses Abstandes, beispielsweise durch eine mechanische Belastung der Diffusionsmembran, hat eine Änderung des Meßwertes zur Folge. Es ist bekannt, diesen Nachteil dadurch zu verbessern, daß die Meßelektrode als eine elektrisch leitende Schicht auf der dem Elektrolyten zugewandten Fläche der Diffusionsmembran aufgebracht wird (GB-PS 1 200 595). Da jedoch je nach Meßaufgabe ein Elektrolyt, das dazugehörige Elektrodenmaterial sowie die notwendige Diffusionsmembran festgelegt sind, ist die Auswahl des Elektrodenmaterials und des Membranmaterials nicht mehr alleine unter den Gesichtspunkten einer guten Haftung des elektrisch leitenden Metallfilms auf der Diffusionsmembran gegeben. Demnach sind die Kombinationsmöglichkeiten von Elektrolyt, Elektrodenmaterial und Diffusionsmembran, welche eine zuverlässige Haftung des leitfähigen Films auf der Diffusionsmembran gewährleisten, eingeschränkt. Schlecht haftende leitfähige Schichten müssen mit einer zusätzlich aufgebrachten porösen Schutzmembran gestützt werden.

Der Erfindung liegt die Aufgabe zugrunde, eine elektrochemische Meßzelle der genannten Art derart zu verbessern, daß die Meßelektrode mit der Diffusionsmembran in einer derart festen Verbindung zueinander steht, daß eine zusätzlich Schutzmembran nicht mehr notwendig ist, und die Wahl der geeigneten Elektrolyten, Meßelektroden und Diffusionsmembranen durch unzulängliche Haftbedingungen der Meßelektrode nicht eingeschränkt wird.

Die Lösung dieser Aufgabe wird dadurch erreicht, daß als Meßelektrode eine aus eigenleitfähigem, elektrochemisch aktiven Kunststoff bestehende Diffusionsmembran vorgesehen ist.

Eine solche Diffusionsmembran findet auch in der mit gleichem Prioritätsdatum eingereichten EP-A-0 173 800 Verwendung.

Eine solche erfindungsgemäße Diffusionsmembran aus eigenleitfähigem Kunststoff besteht entweder selbst aus elektrochemisch aktivem Material, oder wird beispielsweise durch Ionen-Injektion eines Katalysatormaterials aktiviert.

Vorzugsweise besteht die Diffusionsmembran aus einem Gemisch von Polypyrrol und einem Katalysator, wobei der Katalysator dem Polypyrrol in Form von Edelmetallbeimengungen oder Kohlepartikeln zugefügt sein kann. Eine weitere günstige Möglichkeit der Aktivierung besteht darin, dem Polypyrrol bestimmte Mengen von Eisen-Phthalocyanin beizumischen.

Derartig elektrochemisch aktive eigenleitfähige Kunststoffmembranen bieten in Erweiterung ihrer Anwendung die Möglichkeit, daß sie zusätzlich zur Ableitung von elektrischen Potentialen (EKG-Elektrode) eingesetzt werden können.

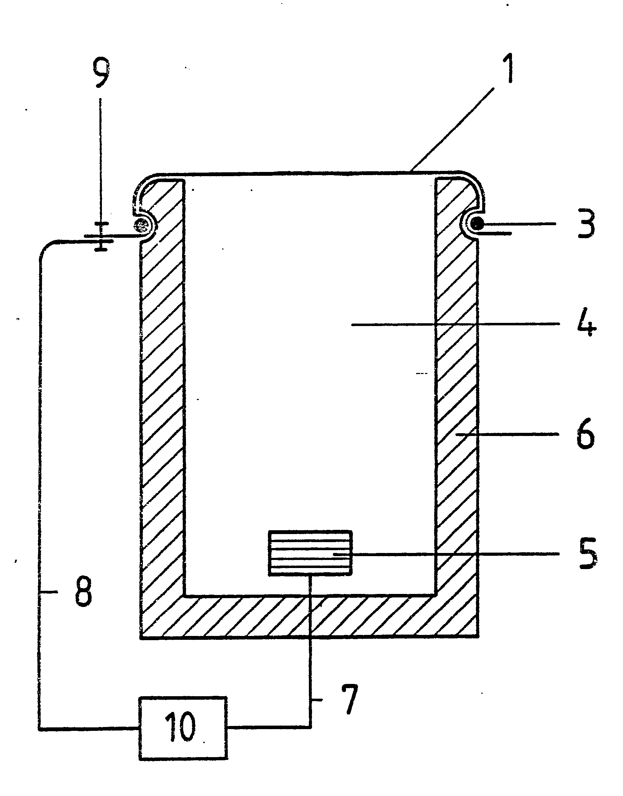

Ein Ausführungsbeispiel der Erfindung ist in der Figur dargestellt und wird im folgenden näher beschrieben.

Die Figur zeigt in einem Querschnitt eine elektrochemische Meßzelle, welche ein Gehäuse 6 aufweist, in dem der Elektrolyt 4 und eine Gegenelektrode 5 aufgenommen ist. Eine Seite des Gehäuses 6 ist gegenüber dem Außenraum durch die Diffusionsmembran 1 abgeschlossen. Die Diffusionsmembran 1 ist über den Spannring 3 an dem Gehäuse 6 befestigt. Da die elektrochemisch aktive Diffusionsmembran 1 als Meßelektrode leitfähig ausgestaltet ist, kann über einen Kontakt 9 und eine Meßleitung 8 das Elektrodensignal an ein Meßgerät 10 weitergeleitet werden. Die Gegenelektrode 5 wird über die Meßleitung 7 ebenfalls mit dem Meßgerät 10 verbunden.

## Patentansprüche

1. Elektrochemische Meßzelle, bestehend aus einer Meßelektrode und einer Gegenelektrode (5) in einem Elektrolyten (4), welcher durch eine Diffusionsmembran (1) von dem Außenraum getrennt ist, dadurch gekennzeichnet, daß die Diffusionsmembran (1) aus eigenleitfähigem, elektrochemisch aktiven Kunststoff besteht und gleichzeitig die Meßelektrode bildet.

2. Elektrochemische Meßzelle nach Anspruch 1, dadurch gekennzeichnet, daß der elektrochemisch aktive Kunststoff aus einem Gemisch von Polypyrrol und einem Katalysator besteht.

3. Elektrochemische Meßzelle nach Anspruch 2, dadurch gekennzeichnet, daß der Katalysator Eisen-Phthalocyanin ist.

## Claims

1. Electrochemical measuring cell, consisting of a measuring electrode and a counter-electrode (5) in an electrolyte (4) which is separated from the exterior space by means of a diffusion membrane (1), characterised in that the diffusion membrane (1) consists of intrinsically conductive, electrochemically active plastics material and at the same time forms the measuring electrode.

2. Electrochemical measuring cell according to claim 1, characterised in that the electrochemically active plastics material consists of a mixture of polypyrrol and a catalyst.

3. Electrochemical measuring cell according to claim 2, characterised in that the catalyst is iron phthalocyanine.

**Revendications**

1. Capteur électrochimique comprenant une électrode de mesure et une plaque signal (5) dans un électrolyte (4) qui est séparé de l'extérieur par une membrane de diffusion (1), caractérisé en ce que cette membrane de diffusion (1) est constituée par une matière synthétique intrinsèquement conductrice, électrochimiquement active et forme simultanément l'électrode de mesure.

2. Capteur électrochimique selon la revendication 1, caractérisé en ce que la matière synthétique électrochimiquement active est constituée par un mélange de polypyrrole et d'un catalyseur.

3. Capteur électrochimique selon la revendication 2, caractérisé en ce que le catalyseur est de la phthalocyanine de fer.